# EUROPEAN PATENT APPLICATION

(11) **EP 4 383 361 A1**
(43) Date of publication of application: **12.06.2024**
(21) Application number: 22852712.3
(22) Date of filing: 24.06.2022
(51) Int. Cl.: H01M 4/13, H01M 4/62

(54) **NON-AQUEOUS ELECTROLYTE SECONDARY BATTERY**

(30) Priority: 05.08.2021 JP 2021128990
(71) Applicant: Panasonic Energy Co., Ltd., Osaka 570-8511 (JP)
(72) Inventor: SAWA, Shouichiro, Kadoma-shi, Osaka 571-0057 (JP)
(74) Representative: Novagraaf International SA
(86) International application number: PCT/JP2022/025257
(87) International publication number: WO 2023/013286

(57) **Abstract**

Provided is a non-aqueous electrolyte secondary battery in which micro-short circuits are suppressed while charge and discharge cycle characteristics are improved. A non-aqueous electrolyte secondary battery according to one aspect of the present disclosure comprises a positive electrode, a negative electrode, a separator separating the positive electrode and the negative electrode from each other, and a non-aqueous electrolyte. The positive electrode comprises a positive electrode current collector and a positive electrode mixture layer formed on a surface of the positive electrode current collector. The positive electrode mixture layer includes a first positive electrode mixture layer opposing the positive electrode current collector, and a second positive electrode mixture layer laminated on the surface of the first positive electrode mixture layer, and at least, the first positive electrode mixture layer contains fibrous carbon, and the second positive electrode mixture layer does not contain fibrous carbon having an average fiber length equal to or greater than the thickness of the second positive electrode mixture layer.

## Description

### TECHNICAL FIELD

The present disclosure relates to a non-aqueous electrolyte secondary battery.

### BACKGROUND ART

An electrode of a non-aqueous electrolyte secondary battery is commonly composed of a metallic current collector and a mixture layer formed on a surface of the current collector. From the viewpoints of improvement of charge-discharge cycle characteristics and the like, it has been investigated to use fibrous carbon such as carbon nanotube (CNT) as a conductive agent in a positive electrode mixture layer in recent years. Patent Literature 1 discloses art of using CNT having a diameter of greater than or equal to 0.5 nm and less than or equal to 10 nm and a length of greater than or equal to 10 µm as a conductive agent in a positive electrode for a purpose of increasing a capacity of a battery and inhibiting decrease in the capacity with high output.

### CITATION LIST

### PATENT LITERATURE

PATENT LITERATURE 1: Japanese Unexamined Patent Application Publication No. 2012-221672

### SUMMARY

### TECHNICAL PROBLEM

However, the present inventors have made intensive investigation, and consequently found that containing long fibrous carbon in the positive electrode mixture layer causes the fibrous carbon to directly connect a positive electrode current collector and a surface of the positive electrode mixture layer, which may cause a minute short-circuit. The art disclosed in Patent Literature 1 does not consider the minute short-circuit, and still has a room for improvement.

It is an object of the present disclosure to provide a non-aqueous electrolyte secondary battery with inhibited minute short-circuit while improving charge-discharge cycle characteristics.

### SOLUTION TO PROBLEM

A non-aqueous electrolyte secondary battery of an aspect of the present disclosure comprises: a positive electrode; a negative electrode; a separator separating the positive electrode and the negative electrode from each other; and a non-aqueous electrolyte, wherein the positive electrode has a positive electrode current collector and a positive electrode mixture layer formed on a surface of the positive electrode current collector, and the positive electrode mixture layer contains a fibrous carbon having a length of greater than or equal to 50% of a thickness of the positive electrode mixture layer, and the fibrous carbon is not exposed to a surface of the positive electrode mixture layer.

A non-aqueous electrolyte secondary battery of another aspect of the present disclosure comprises: a positive electrode; a negative electrode; a separator separating the positive electrode and the negative electrode from each other; and a non-aqueous electrolyte, wherein the positive electrode has a positive electrode current collector and a positive electrode mixture layer formed on a surface of the positive electrode current collector, the positive electrode mixture layer includes a first positive electrode mixture layer facing the positive electrode current collector and a second positive electrode mixture layer stacked on a surface of the first positive electrode mixture layer, at least the first positive electrode mixture layer contains a fibrous carbon, and the second positive electrode mixture layer does not contain the fibrous carbon having an average fiber length of greater than or equal to a thickness of the second positive electrode mixture layer.

### ADVANTAGEOUS EFFECT OF INVENTION

According to the non-aqueous electrolyte secondary battery of the present disclosure, the minute short-circuit may be inhibited while improving the charge-discharge cycle characteristics.

### BRIEF DESCRIPTION OF DRAWINGS

FIG. 1 is an axial sectional view of a non-aqueous electrolyte secondary battery of an example of an embodiment.
FIG. 2 is a sectional view of a positive electrode of an example of the embodiment.

### DESCRIPTION OF EMBODIMENTS

Hereinafter, an example of the embodiment of a non-aqueous electrolyte secondary battery according to the present disclosure will be described in detail with reference to the drawings. Hereinafter, a cylindrical battery housing a wound electrode assembly in a cylindrical exterior will be exemplified, but the shape of the exterior is not limited to the cylindrical shape, and may be, for example, a rectangular shape, a coin shape, or the like. The exterior may be a pouch composed of a laminated sheet including a metal layer and a resin layer. The electrode assembly may be a stacked electrode assembly in which a plurality of positive electrodes and a plurality of negative electrodes are alternately stacked with a separator interposed therebetween.

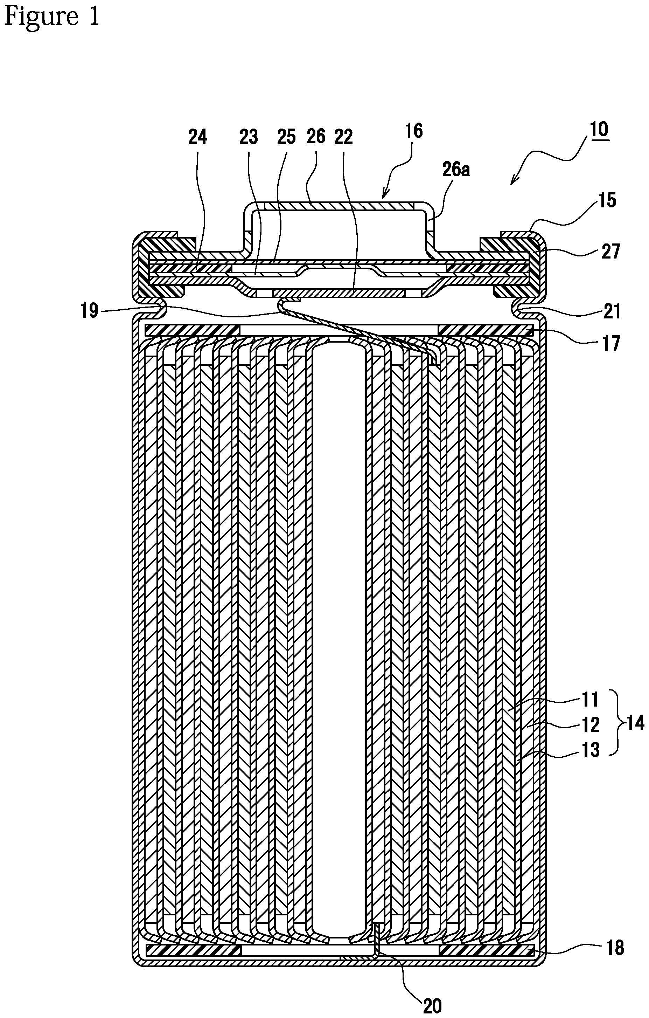

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An end part of an opening on an upper side of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through an outside of the insulating plate 18 toward the bottom side of the exterior 15, and is welded to a bottom inner face of the exterior 15. In the secondary battery 10, the exterior 15 becomes a negative electrode terminal.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13, and the non-aqueous electrolyte, which constitute the secondary battery 10, particularly the positive electrode 11, will be described in detail.

### [Positive Electrode]

The positive electrode 11 has a positive electrode current collector and a positive electrode mixture layer formed on a surface of the positive electrode current collector. For the positive electrode current collector, a foil of a metal stable within a potential range of the positive electrode, such as aluminum, a film in which such a metal is disposed on a surface layer, or the like may be used. A thickness of the positive electrode current collector is, for example, greater than or equal to 10 µm and less than or equal to 30 µm.

The positive electrode mixture layer is preferably formed on both surfaces of the positive electrode current collector. A thickness of the positive electrode mixture layer is preferably greater than or equal to 50 µm and less than or equal to 200 µm, and more preferably greater than or equal to 70 µm and less than or equal to 150 µm on one side of the positive electrode current collector. The positive electrode mixture layer includes, for example, a positive electrode active material, a conductive agent, and a binder. The positive electrode may be produced by, for example, applying a positive electrode mixture slurry including the positive electrode active material, the conductive agent, the binder, and the like on both the surfaces of the positive electrode current collector, drying the coating film, and then rolling the coating film by using a roller or the like.

Examples of the positive electrode active material included in the positive electrode mixture layer may include a lithium-transition metal oxide containing a transition metal element such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or as a mixture thereof. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O_{z} (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3).

Examples of the binder included in the positive electrode mixture layer include a fluoropolymer and a rubber polymer. Examples of the fluoropolymer include polytetrafluoroethylene (PTFE), polyvinylidene fluoride (PVDF), or a modified product thereof. Examples of the rubber polymer include ethylene-propylene-isoprene copolymer and ethylene-propylene-butadiene copolymer. These may be used singly, or in combination of two or more.

The positive electrode mixture layer contains a fibrous carbon, and the fibrous carbon functions as the conductive agent. In an example of the embodiment of the present disclosure, the positive electrode mixture layer contains the fibrous carbon having a length of greater than or equal to 50% of the thickness of the positive electrode mixture layer. This may inhibit isolation of the positive electrode active material from charge and discharge, and thereby electron conductivity in the positive electrode mixture layer is retained, and the charge-discharge cycle characteristics may be improved. The length of the fibrous carbon contained in the positive electrode mixture layer is preferably greater than or equal to 90% of the thickness of the positive electrode mixture layer. A content of the fibrous carbon in the positive electrode mixture layer is, for example, greater than or equal to 0.5 mass% and less than or equal to 5 mass% relative to a total mass of the positive electrode mixture layer.

As the fibrous carbon, known materials used as a conductive agent of a battery may be used. Examples thereof may include carbon nanotube (CNT), carbon nanofiber (CNF), vapor-grown carbon fiber (VGCF), electrospinning carbon fiber, polyacrylonitrile (PAN)-based carbon fiber, and pitch-based carbon fiber. These may be used singly, or in combination of two or more.

The fibrous carbon is preferably CNT. CNT may be any of a single-wall carbon nanotube (SWCNT) and a multiwall carbon nanotube (MWCNT). From the viewpoint of increasing a capacity of the secondary battery 10, it has been investigated that the positive electrode mixture layer is thickened to increase an amount of the positive electrode active material in the positive electrode mixture layer in recent years. Since MWCNT has typically a longer fiber length than SWCNT, CNT contained in the positive electrode mixture layer is preferably MWCNT. The effect of improving the charge-discharge cycle characteristics by the fibrous carbon becomes more remarkable with a thicker positive electrode mixture layer. The positive electrode mixture layer may contain both of MWCNT and SWCNT.

CNT may have an average diameter of greater than or equal to 200 nm and less than or equal to 800 nm, and may have an average fiber length of greater than or equal to 25 µm and less than or equal to 200 µm. When the average diameter and the average fiber length are within these ranges, a conductive path in the positive electrode mixture layer may be achieved. Here, the average diameter of CNT is calculated by measuring diameters of 30 CNTs by using a scanning electron microscope (hereinafter, which may be referred to as SEM) and averaging the diameters. The average fiber length of CNT is calculated by measuring lengths of 30 CNTs by using the SEM and averaging the lengths.

The positive electrode mixture layer may contain a non-fibrous carbon such as carbon black (CB), acetylene black (AB), Ketjenblack, and graphite in addition to the fibrous carbon. These may be used singly, or in combination of two or more. A content of the non-fibrous carbon in the positive electrode mixture layer is, for example, greater than or equal to 0.1 mass% and less than or equal to 5 mass% relative to the total mass of the positive electrode mixture layer.

In the positive electrode mixture layer, the fibrous carbon is not exposed to a surface of the positive electrode mixture layer. This may inhibit a minute short-circuit. Although the minute short-circuit does not deteriorate safety of the secondary battery 10, the minute short-circuit causes discharge, and thereby the battery capacity decreases.

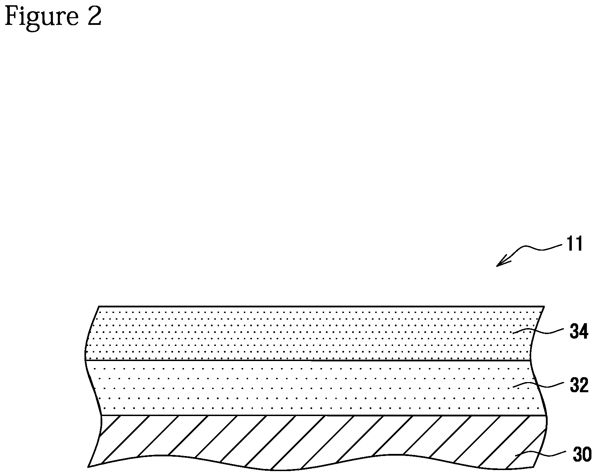

Next, another example of the embodiment of the present disclosure will be described with reference to FIG. 2. FIG. 2 is a sectional view of the positive electrode 11. In the embodiment described below, description of effects and modified examples same as of the above embodiment will be omitted.

The positive electrode 11 has a positive electrode current collector 30 and a positive electrode mixture layer formed on a surface of the positive electrode current collector 30, and the positive electrode mixture layer is preferably formed on both surfaces of the positive electrode current collector 30. The positive electrode mixture layer includes a first positive electrode mixture layer 32 facing the positive electrode current collector 30 and a second positive electrode mixture layer 34 stacked on a surface of the first positive electrode mixture layer 32. At least the first positive electrode mixture layer 32 contains a fibrous carbon, and the second positive electrode mixture layer 34 does not contain the fibrous carbon having an average fiber length of greater than or equal to a thickness of the second positive electrode mixture layer 34. This may insure the electron conductivity of the positive electrode mixture layer while inhibiting a minute short-circuit.

The thickness of the second positive electrode mixture layer 34 is preferably greater than or equal to 1% and less than or equal to 15%, and more preferably greater than or equal to 5% and less than or equal to 10% relative to a total thickness of the positive electrode mixture layer. For example, when the positive electrode mixture layer is composed of the first positive electrode mixture layer 32 and the second positive electrode mixture layer 34, a ratio of the thicknesses of the first positive electrode mixture layer 32 and the second positive electrode mixture layer 34 is within a range of greater than or equal to 1:99 and less than or equal to 15:85.

An average fiber length of the fibrous carbon contained in the first positive electrode mixture layer 32 is preferably greater than or equal to a thickness of the first positive electrode mixture layer 32. This may further inhibit isolation of the positive electrode active material from charge and discharge and remarkably improve the charge-discharge cycle characteristics.

A content of the fibrous carbon in the first positive electrode mixture layer 32 is, for example, greater than or equal to 0.5 mass% and less than or equal to 5 mass% relative to a total mass of the first positive electrode mixture layer 32. A content of the fibrous carbon in the second positive electrode mixture layer 34 is, for example, less than or equal to 0.1 mass% relative to a total mass of the second positive electrode mixture layer 34.

The second positive electrode mixture layer 34 preferably does not contain the fibrous carbon. The second positive electrode mixture layer 34 not containing the fibrous carbon may further reduce a possibility of the minute short-circuit.

A method for producing the positive electrode 11 is not particularly limited. The positive electrode 11 may be produced by, for example: producing each of a first positive electrode mixture slurry including the positive electrode active material, the fibrous carbon, and the binder, and a second positive electrode mixture slurry including the positive electrode active material and the binder; applying the first positive electrode mixture slurry on both the surfaces of the positive electrode current collector 30, and drying the coating film; applying the second positive electrode mixture slurry thereon, and drying the coating film; and then rolling the coating film with a roller to produce the positive electrode 11 comprising the positive electrode mixture layer with a double layered structure as illustrated in FIG. 2. It is also acceptable that the first positive electrode mixture slurry is applied, then the coating film is not dried, the second positive electrode mixture slurry is applied thereon, and then the coating films are dried.

### [Negative Electrode]

The negative electrode 12 has a negative electrode current collector and a negative electrode mixture layer formed on a surface of the negative electrode current collector. For the negative electrode current collector, a foil of a metal stable within a potential range of the negative electrode, such as copper, a film in which such a metal is disposed on a surface layer, or the like may be used. A thickness of the negative electrode current collector is, for example, greater than or equal to 5 µm and less than or equal to 30 µm.

The negative electrode mixture layer is preferably formed on both surfaces of the negative electrode current collector. A thickness of the negative electrode mixture layer is, for example, greater than or equal to 10 µm and less than or equal to 150 µm on one side of the negative electrode current collector. The negative electrode mixture layer includes, for example, a negative electrode active material and a binder. The negative electrode may be produced by, for example, applying a negative electrode mixture slurry including the negative electrode active material, the binder, and the like on both the surfaces of the negative electrode current collector, drying the coating film, and then rolling the coating film by using a roller or the like.

The negative electrode active material included in the negative electrode mixture layer is not particularly limited as long as it may reversibly absorb and desorb lithium ions, and a carbon material such as graphite is typically used. The graphite may be any of: a natural graphite such as flake graphite, massive graphite, and amorphous graphite; and an artificial graphite such as massive artificial graphite and graphitized mesophase-carbon microbead. As the negative electrode active material, a metal that forms an alloy with Li, such as Si and Sn, a metal compound including Si, Sn, and the like, a lithium-titanium composite oxide, and the like may be used. For example, a Si-containing compound represented by SiOₓ (0.5≤x≤1.6), a Si-containing compound in which Si fine particles are dispersed in a lithium silicate phase represented by Li_{2y}SiO_{(2+y)} (0<y<2), or the like may be used in combination with graphite.

Examples of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or may be a partially neutralized salt), and polyvinyl alcohol (PVA). These may be used singly, or in combination of two or more.

### [Separator]

The separator 13 separates the positive electrode 11 and the negative electrode 12 from each other. For the separator 13, a porous sheet having an ion permeation property and an insulation property is used, for example. Specific examples of the porous sheet include a microporous film, a woven fabric, and a nonwoven fabric. As a material for the separator, an olefinic resin such as polyethylene or polypropylene, cellulose, or the like is suitable. The separator 13 may be a layered product having a cellulose fiber layer and a thermoplastic resin fiber layer such as an olefinic resin. The separator 13 may also be a multilayer separator including a polyethylene layer and a polypropylene layer, or may be coated with a material such as an aramid resin or a ceramic on the surface thereof.

### [Non-Aqueous Electrolyte]

The non-aqueous electrolyte may include a non-aqueous solvent and an electrolyte salt dissolved in the non-aqueous solvent. For the non-aqueous solvent, esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {1 and m represent integers of 0 or more}. These lithium salts may be used singly, or as a mixture thereof. Among them, LiPF₆ is preferably used from the viewpoints of ion conductivity, electrochemical stability, and the like. A concentration of the lithium salt may be, for example, greater than or equal to 0.8 mol and less than or equal to 1.8 mol per litter of the non-aqueous solvent.

### EXAMPLES

Hereinafter, the present disclosure will be further described with Examples, but the present disclosure is not limited to these Examples.

### <Example>

### [Production of Positive Electrode]

As a positive electrode active material, a lithium-transition metal oxide represented by LiNi_{0.8}Co_{0.15}Al_{0.05}O₂ was used. The positive electrode active material, multiwall carbon nanotube (MWCNT) having an average diameter of 500 nm and an average fiber length of 90 µm, and polyvinylidene fluoride (PVDF) having an average molecular weight of 1.1 million were mixed at a mass ratio of 98:1:1, and kneaded with adding N-methylpyrrolidone (NMP) to prepare a first positive electrode mixture slurry having a solid content of 70 mass%. The positive electrode active material, acetylene black (AB), and polyvinylidene fluoride (PVDF) having an average molecular weight of 1.1 million were mixed at a mass ratio of 98:1:1, and kneaded with adding N-methylpyrrolidone (NMP) to prepare a second positive electrode mixture slurry having a solid content of 70 mass%. Then, the first positive electrode mixture slurry was applied on both surfaces of a positive electrode current collector composed of aluminum foil by a doctor blade method, the coating film was dried, the second positive electrode mixture slurry was applied thereon, the coating film was dried, then the coating film was rolled with a roller, and then cut to a predetermined electrode size to produce a positive electrode in which first positive electrode mixture layers and second positive electrode mixture layers were formed on both the surfaces of the positive electrode current collector. Of the positive electrode after the rolling, a thickness of the first positive electrode mixture layer was 90 µm, and a thickness of the second positive electrode mixture layer was 10 µm. On a part of the positive electrode, an exposed portion where the surface of the positive electrode current collector was exposed was provided.

### [Production of Negative Electrode]

Mixing was performed so that a content of graphite powder was 95 parts by mass and a content of SiO was 5 parts by mass, and this mixture was used as a negative electrode active material. The negative electrode active material, carboxymethylcellulose (CMC), and styrene-butadiene rubber (SBR) were kneaded in water so that a mass ratio thereof was 100:1:1.2 to prepare a negative electrode mixture slurry. Then, the negative electrode mixture slurry was applied on both surfaces of a negative electrode current collector composed of copper foil by a doctor blade method, the coating film was dried, then the coating film was rolled with a roller, and cut to a predetermined electrode size to produce a negative electrode in which negative electrode mixture layers were formed on both the surfaces of the negative electrode current collector. On a part of the negative electrode, an exposed portion where the surface of the negative electrode current collector was exposed was provided.

### [Preparation of Non-Aqueous Electrolyte]

Into a mixed solvent in which ethylene carbonate (EC) and dimethyl carbonate (DMC) were mixed at a volume ratio of 1:3, lithium hexafluorophosphate (LiPF₆) was dissolved at a concentration of 1 mol/L. Furthermore, vinylene carbonate (VC) was dissolved into the above mixed solvent at a concentration of 5 mass% to prepare a non-aqueous electrolyte (electrolyte liquid).

### [Production of Secondary Battery]

An aluminum lead was attached to the exposed portion of the positive electrode, a nickel lead was attached to the exposed portion of the negative electrode, and the positive electrode and the negative electrode were spirally wound with a separator composed of a polyethylene film with 12 µm in thickness interposed therebetween to produce a wound electrode assembly. This electrode assembly was housed in an exterior, and the nickel lead was welded to a bottom of the exterior. Then, the aluminum lead was welded to a sealing assembly, the non-aqueous electrolyte was injected, and then an opening of the exterior was sealed with the sealing assembly to obtain non-aqueous electrolyte secondary batteries having a design capacity of 2500 mAh.

### [Evaluation of Occurrence Rate of Minute Short-Circuit]

Under an environment at 25°C, the above secondary batteries were charged at a constant current of 0.7 It until a state of charge (SOC) reached 40% to measure a battery voltage. Then, under an environment at 60°C, the secondary batteries were stored for one day, and then the battery voltage was measured again. When the battery voltage after the storage dropped by greater than or equal to 0.5 V from the battery voltage before the storage, the battery was determined to have a minute short-circuit, and otherwise the battery was determined to have no minute short-circuit. The above measurement was performed for 30 secondary batteries to evaluate an occurrence rate of minute short-circuit based on the number of secondary batteries determined to have a minute short-circuit.

### [Evaluation of Capacity Retention]

Under an environment at 25°C, one of the secondary batteries determined to have a minute short-circuit in the evaluation of minute short-circuit was charged at a constant current of 0.7 It until a battery voltage reached 4.2 V, and then charged at a constant voltage of 4.2 V until a current value reached 0.05 It. Thereafter, the battery was discharged at a constant current of 0.7 It until the battery voltage reached 2.5 V. This set of charge and discharge was specified as one cycle, and 100 cycles were performed. A capacity retention in the charge-discharge cycle of the secondary battery was determined with the following formula. Capacity Retention = (Discharge Capacity at 100th Cycle / Discharge Capacity at 1st Cycle) x 100

### <Comparative Example 1>

Secondary batteries were produced and evaluated in the same manner as in Example except that, in the production of the positive electrode, a first positive electrode mixture slurry was prepared by using MWCNT having an average fiber length of 10 µm instead of the MWCNT having an average fiber length of 90 µm.

### <Comparative Example 2>

Secondary batteries were produced and evaluated in the same manner as in Example except that, in the production of the positive electrode, a first positive electrode mixture slurry was prepared by using AB instead of the MWCNT having an average fiber length of 90 µm.

### <Comparative Example 3>

Secondary batteries were produced and evaluated in the same manner as in Example except that, in the production of the positive electrode, the second positive electrode mixture slurry was not applied on any of both surfaces of the positive electrode current collector, and the second positive electrode mixture layer was not formed.

Table 1 shows the evaluation results of the respective secondary batteries of Example and Comparative Examples. Table 1 also shows the average fiber length of the fibrous carbon contained in the first positive electrode mixture layer, a thickness of the first positive electrode mixture layer, and a thickness of the second positive electrode mixture layer.

**[Table 1]**

| | First positive electrode mixture layer | | Thickness of second positive electrode mixture layer | Occurrence rate of minute short-circuit | Capacity Retention |
|---|---|---|---|---|---|
| | Average fiber length of CNT | Thickness | | | |
| Example | 90µm | 90µm | 10µm | 0/30 | 85% |
| Comparative Example 1 | 10µm | 90µm | 10µm | 0/30 | 80% |
| Comparative Example 2 | - (AB contai ned) | 90µm | 10µm | 0/30 | 80% |
| Comparative Example 3 | 90µm | 90µm | 0 µm (absent) | 6/30 | 85% |

The secondary batteries of Example cause no minute short-circuit, and can have a higher capacity retention than Comparative Examples. On the other hand, the secondary batteries of Comparative Example 1 contain the MWCNT having a short average fiber length and the secondary batteries of Comparative Example 3 contain no fibrous carbon, and thereby the secondary batteries of Comparative Examples 1 and 3 have a lower capacity retention than the secondary battery of Example. The secondary batteries of Comparative Example 2 do not include a second positive electrode mixture layer, and thereby a plurality of the secondary batteries cause a minute short-circuit.

### REFERENCE SIGNS LIST

10 secondary battery, 11 positive electrode, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket, 30 positive electrode current collector, 32 first positive electrode mixture layer, 34 second positive electrode mixture layer

## Claims

1. A non-aqueous electrolyte secondary battery, comprising:
a positive electrode;
a negative electrode;
a separator separating the positive electrode and the negative electrode from each other; and
a non-aqueous electrolyte, wherein
the positive electrode has a positive electrode current collector and a positive electrode mixture layer formed on a surface of the positive electrode current collector, and
the positive electrode mixture layer contains a fibrous carbon having a length of greater than or equal to 50% of a thickness of the positive electrode mixture layer, and the fibrous carbon is not exposed to a surface of the positive electrode mixture layer.

2. The non-aqueous electrolyte secondary battery according to claim 1, wherein the length of the fibrous carbon is greater than or equal to 90% of the thickness of the positive electrode mixture layer.

3. A non-aqueous electrolyte secondary battery, comprising:
a positive electrode;
a negative electrode;
a separator separating the positive electrode and the negative electrode from each other; and
a non-aqueous electrolyte, wherein
the positive electrode has a positive electrode current collector and a positive electrode mixture layer formed on a surface of the positive electrode current collector,
the positive electrode mixture layer includes a first positive electrode mixture layer facing the positive electrode current collector and a second positive electrode mixture layer stacked on a surface of the first positive electrode mixture layer,
at least the first positive electrode mixture layer contains a fibrous carbon, and
the second positive electrode mixture layer does not contain the fibrous carbon having an average fiber length of greater than or equal to a thickness of the second positive electrode mixture layer.

4. The non-aqueous electrolyte secondary battery according to claim 3, wherein an average fiber length of the fibrous carbon contained in the first positive electrode mixture layer is greater than or equal to a thickness of the first positive electrode mixture layer.

5. The non-aqueous electrolyte secondary battery according to claim 3 or 4, wherein the second positive electrode mixture layer does not contain the fibrous carbon.
